# EUROPEAN PATENT SPECIFICATION

(11) **EP 3 499 819 B1**
(45) Date of publication and mention of the grant of the patent: **16.09.2020**
(21) Application number: 16916577.6
(22) Date of filing: 26.09.2016
(51) Int. Cl.: H04L 12/803, H04L 29/08, H04L 12/46, H04L 12/00

(54) **LOAD BALANCING METHOD AND RELATED DEVICE**
LASTENAUSGLEICHSVERFAHREN UND ZUGEHÖRIGE VORRICHTUNG
PROCÉDÉ D'ÉQUILIBRAGE DE CHARGE, ET DISPOSITIF ASSOCIÉ

(43) Date of publication of application: 19.06.2019
(73) Proprietor: Huawei Technologies Co., Ltd., Longgang District Shenzhen, Guangdong 518129 (CN)
(72) Inventor: QIAO, Xiaoqiang, Shenzhen Guangdong 518129 (CN); LI, Yan, Shenzhen Guangdong 518129 (CN)
(74) Representative: Gill Jennings & Every LLP
(86) International application number: PCT/CN2016/100108
(87) International publication number: WO 2018/053838

(56) References cited:
- EP-A1- 3 462 769
- WO-A1-2016/098031
- CN-A- 1 870 526
- CN-A- 102 170 474
- CN-A- 104 468 390
- CN-A- 105 681 217

## Description

### TECHNICAL FIELD

The present invention relates to the field of communications technologies, and in particular, to a load balancing method and related devices.

### BACKGROUND

A load balancing technology is a key technical problem in a cluster system, and a load balancer is usually deployed on a front end of a server cluster. A main purpose of load balancing is to minimize communication overheads between processes by evenly allocating workload and optimizing resource utilization and response time of a task through task scheduling.

In a conventional System Architecture Evolution (System Architecture Evolution, SAE) network architecture, a manner in which network element selection and the load balancing are implemented based on a client endpoint is used. However, for a core network architecture for controlling convergence, a controller is implemented by using a virtual cluster architecture for cloud computing, and there may be more flexible scaling and dynamic changes in an internal network element. In this case, a cost of obtaining a controller location and real-time load information by the client is relatively high. Therefore, the foregoing method is not applicable

From the publication CN105681217 it is known a system to avoiding balance configuration file requirements and load equalizer re-starting requirements, to realize container assembly dynamic load balancing process in an automatic manner and utilize a cloud computing system to reduce dynamic load changing difficulties of a container assembly. Another system is known from EP3462769, published on 03-04-2019, with the priority date 28-06-2016.

Therefore, how to improve utilization and availability of resources of a core network while implementing load balancing after flexible scaling and a dynamic change occur in the internal network element of the core network architecture for controlling convergence is a technical problem to be urgently resolved.

### SUMMARY

According to a first aspect, an embodiment of the present invention provides a load balancing method, including:
when a first controller dynamically changes, sending, by an operation management system, a first load migration instruction to a network element selector, and updating, by the network element selector, record information based on the first load migration instruction, where the record information includes at least one of the following: a record of a mapping relationship between a session index and a controller, and a status record of the controller. In this way, when the network element selector subsequently receives interaction signaling that is of UE and that is sent by an external network element, the network element selector selects a second controller for the UE based on updated record information, and forwards the interaction signaling to the second controller. In this way, when a controller dynamically changes (for example, the controller is deleted or added), a problem that the network element selector does not re-balance load in time may be avoided, thereby improving utilization and availability of resources of a core network.

In some feasible implementations, the first load migration instruction carries an identifier of the first controller and an identifier of the second controller.

In some feasible implementations, the first load migration instruction carries a user group identifier and the identifier of the second controller.

In some feasible implementations, the first load migration instruction carries the identifier of the first controller and status information of the first controller.

In some feasible implementations, the status information of the first controller is that the first controller is deleted;
a specific implementation in which the network element selector updates the record of the mapping relationship between the session index and the controller based on the first load migration instruction includes: searching for a record that is of the mapping relationship and that matches the identifier of the first controller from the record of the mapping relationship between the session index and the controller, and deleting the detected record of the mapping relationship; and
a specific implementation in which the network element selector updates the status record of the controller based on the first load migration instruction includes: searching for, by the network element selector, a status record that matches the identifier of the first controller from the status record of the controller, and marking the detected status record as deleted.

In some feasible implementations, the status information of the first controller is that the first controller is added; and
a specific implementation in which the network element selector updates the status record of the controller based on the first load migration instruction includes: adding, by the network element selector, a status record corresponding to the identifier of the first controller to the status record of the controller, and marking the added status record as added.

In some feasible implementations, after the forwarding, by network element selector, the interaction signaling to the second controller, the method further includes: if the UE is a migration UE, re-updating, by the network element selector, the record of the mapping relationship between the session index and the controller. Therefore, when a controller corresponding to the UE changes, the record of the mapping relationship between the session index and the controller is updated in time, so that the network element selector subsequently allocates a controller to the UE.

In some feasible implementations, after the forwarding, by network element selector, the interaction signaling to the second controller, the method further includes: receiving, by the network element selector, a session index update instruction initiated by the second controller, where the session index update instruction carries a new session index of the UE; and re-updating, by the network element selector, the record of the mapping relationship between the session index and the controller based on the new session index of the UE. Therefore, after the second controller allocates the new session index to the UE, the record of the mapping relationship between the session index and the controller is updated in time, so that the network element selector subsequently performs a corresponding operation based on the new session index.

In some feasible implementations, after the updating, by the network element selector, record information based on the first load migration instruction, the method further includes: receiving, by the network element selector, a session index update instruction initiated by the second controller, where the session index update instruction carries a new session index of a user corresponding to the identifier of the first controller or of a user corresponding to the user group identifier; and updating, by the network element selector, the record of the mapping relationship between the session index and the controller based on the new session index of the user corresponding to the identifier of the first controller or of the user corresponding to the user group identifier. Therefore, after allocating the new session index to the user corresponding to the identifier of the first controller or the user corresponding to the user group identifier, the second controller updates the record of the mapping relationship between the session index and the controller in time, so that network element selector subsequently performs a corresponding operation based on the new session index.

In some feasible implementations, the specific implementation in which the network element selector updates the record of the mapping relationship between the session index and the controller based on the first load migration instruction includes: searching for, by the network element selector, the record that is of the mapping relationship and that matches the identifier of the first controller or a record that is of the mapping relationship and that matches the user group identifier from the record of the mapping relationship between the session index and the controller, and replacing an identifier of the controller in the detected record of the mapping relationship with the identifier of the second controller.

According to a second aspect, an embodiment of the present invention provides a load balancing method, including:
when detecting that a first controller dynamically changes, sending, by an operation management system, a first load migration instruction to a network element selector, where the first load migration instruction carries an identifier of the first controller or a user group identifier, and an identifier of a second controller, and information that is carried by the first load migration instruction is used to update a record of a mapping relationship between a session index and a controller. In this way, when a controller dynamically changes (for example, the controller is deleted or added), a problem that the network element selector does not re-balance load in time may be avoided, thereby improving utilization and availability of resources of a core network.

In some feasible implementations, the operation management system sends a second load migration instruction to the second controller, where the second load migration instruction carries the identifier of the first controller or the user group identifier, and the identifier of the first controller or the user group identifier is used to read, from a database, context data of a user corresponding to the identifier of the first controller or context data of a user corresponding to the user group identifier to the second controller.

According to a third aspect, an embodiment of the present invention provides a load balancing method, including:
receiving, by a second controller, a second load migration instruction from an operation management system, where the second load migration instruction carries an identifier of a first controller or a user group identifier; reading, by the second controller, from a database, context data of a user corresponding to the identifier of the first controller, or context data of a user corresponding to the user group identifier to the second controller; allocating, by the second controller, a new session index to the user corresponding to the identifier of the first controller or the user corresponding to the user group identifier; initiating, by the second controller, a session index update instruction to an external network element and a network element selector, where the session index update instruction carries the new session index of the user corresponding to the identifier of the first controller or of the user corresponding to the user group identifier, the session index update instruction is used to instruct the external network element to update the session index of the user, and the session index update instruction is used to instruct the network element selector to update a record of a mapping relationship between the session index and a controller; and receiving, by the second controller, interaction signaling that is of UE and that is forwarded by the network element selector, and performing related processing based on content of the interaction signaling. In this way, when a controller dynamically changes, a problem that a network element selector does not re-balance load in time may be avoided, thereby improving utilization and availability of resources of a core network.

According to a fourth aspect, an embodiment of the present invention provides a network element selector, including a module configured to perform the method according to the first aspect.

According to a fifth aspect, an embodiment of the present invention provides an operation management system, including a module configured to perform the method according to the second aspect.

According to a sixth aspect, an embodiment of the present invention provides a controller, including a module configured to perform the method according to the third aspect.

According to a seventh aspect, the present invention provides a network element selector, where the network element selector includes a processor, and the processor is configured to support the network element selector in performing corresponding functions in the load balancing method according to the first aspect. The network element selector may further include a memory. The memory is configured to: be coupled to the processor, and store a program instruction and data that are necessary for the network element selector. The network element selector may further include a communications interface used for communication between the network element selector and another device or a communications network.

According to an eighth aspect, the present invention provides an operation management system, where the operation management system includes a processor, and the processor is configured to support the operation management system in performing corresponding functions in the load balancing method according to the second aspect. The operation management system may further include a memory. The memory is configured to: be coupled to the processor, and store a program instruction and data that are necessary for the operation management system. The operation management system may further include a communications interface used for communication between the operation management system and another device or a communications network.

According to a ninth aspect, the present invention provides a controller, where the controller includes a processor, and the processor is configured to support the controller in performing corresponding functions in the load balancing method according to the third aspect. The controller may further include a memory. The memory is configured to: be coupled to the processor, and store a program instruction and data that are necessary for the controller. The controller may further include a communications interface used for communication between the base station and another device or communications network.

According to a tenth aspect, the present invention provides a computer storage medium, configured to store a computer software instruction used by the foregoing network element selector according to the seventh aspect, where the computer storage medium includes a program used for performing the foregoing aspect.

According to an eleventh aspect, the present invention provides a computer storage medium, configured to store a computer software instruction used by the foregoing operation management system according to the eighth aspect, where the computer storage medium includes a program used for performing the foregoing aspect.

According to a twelfth aspect, the present invention provides a computer storage medium, configured to store a computer software instruction used by the foregoing controller according to the eighth aspect, where the computer storage medium includes a program used for performing the foregoing aspect.

These aspects or other aspects of the present invention may be clearer in description of the following embodiments.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a schematic diagram of a communications system according to an embodiment of the present invention;
FIG. 2 is a schematic flowchart of a load balancing method according to a first embodiment of the present invention;
FIG. 3 is a schematic flowchart of a load balancing method according to a second embodiment of the present invention;
FIG. 4 is a schematic flowchart of a load balancing method according to a third embodiment of the present invention;
FIG. 5 is a schematic flowchart of a load balancing method according to a fourth embodiment of the present invention;
FIG. 6 is a schematic structural diagram of a network element selector according to an embodiment of the present invention;
FIG. 7 is a schematic structural diagram of an operation management system according to an embodiment of the present invention;
FIG. 8 is a schematic structural diagram of a controller according to an embodiment of the present invention; and
FIG. 9 is a schematic structural diagram of a computer device according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

The following provides detailed descriptions separately.

In the specification, claims, and accompanying drawings of the present invention, the terms "first", "second", "third", "fourth", and so on are intended to distinguish between different objects but do not indicate a particular order. In addition, the terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in the specification means that a particular characteristic, structure, or feature described with reference to the embodiment may be included in at least one embodiment of the present invention. The phrase shown in various locations in the specification may not necessarily refer to a same embodiment, and is not an independent or optional embodiment exclusive from another embodiment. It is explicitly and implicitly understood by a person skilled in the art that the embodiments described in the specification may be combined with another embodiment.

Some terms in this application are described below, to help a person skilled in the art have a better understanding.
1) User equipment (User Equipment, UE), is a device that provides a user with voice and/or data connectivity, for example, a handheld device or an in-vehicle device having a wireless connection function. For example, a common terminal includes a mobile phone, a tablet computer, a notebook computer, a palmtop computer, a mobile Internet device (mobile internet device, MID), and a wearable device such as a smartwatch, a smart band, and a pedometer.
2) An external interaction network element (External Network Element) interacts with a control network element (Controller) and is a related network element outside a core network that servers the UE, for example, an eNodeB, an AF, and a GW-U.
3) A controller (Controller) is a control network element of a core network architecture, and integrates a plurality of control functions of a core network, for example, including a function such as mobility management, session management, policy, and charging management, and is responsible for processing related signaling.
4) A network element selector (Network Element Selector, NES) is an independent network element selector, and is responsible for implementing a function such as selection of the controller, load balancing, and session persistence.
5) An operation management system (operation and maintenance, O&M) is responsible for controlling management of the control network element, including addition and deletion of the control network element.
6) A User context database (Database Server, DB Server), which is configured to store related data of a user, including status information, load information, and the like.
7) The network element selector needs to ensure that an access request of a user is still allocated to a controller, and this mechanism is called session persistence. A session index (Session Index) is used to identify the user and maintain a session.
(8) "A plurality of' refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

The following describes the embodiments of this application with reference to the accompanying drawings.

Currently, in order to resolve a problem that a manner of implementing network element selection and load balancing based on a client endpoint is not applicable after flexible scaling and a dynamic change occur in an internal network element in a core network architecture for controlling convergence, an independent network element selector is deployed on a core network side, where the independent network element selector is responsible for receiving interaction signaling that is sent by an external network element to a controller, performing selection among a plurality of controllers, and implementing average allocation of signaling load. Compared with the manner of implementing network element selection and load balancing based on the client endpoint, deploying the independent network element selector on the core network side shields an impact that is imposed by the dynamic scaling of the controller on the external network element. In addition, the network element selector can dynamically obtain a load status of the controller, thereby supporting more flexible load balancing and automatic scaling policies with a flexible management function of the controller. However, in a manner of deploying the independent network element selector on the core network side, when a dynamic change occurs in a converged controller (for example, failure recovery, lateral scale-in, and lateral scale-out), a problem of how to re-balance load by the network element selector is not considered, thereby affecting utilization and availability of resources of a core network.

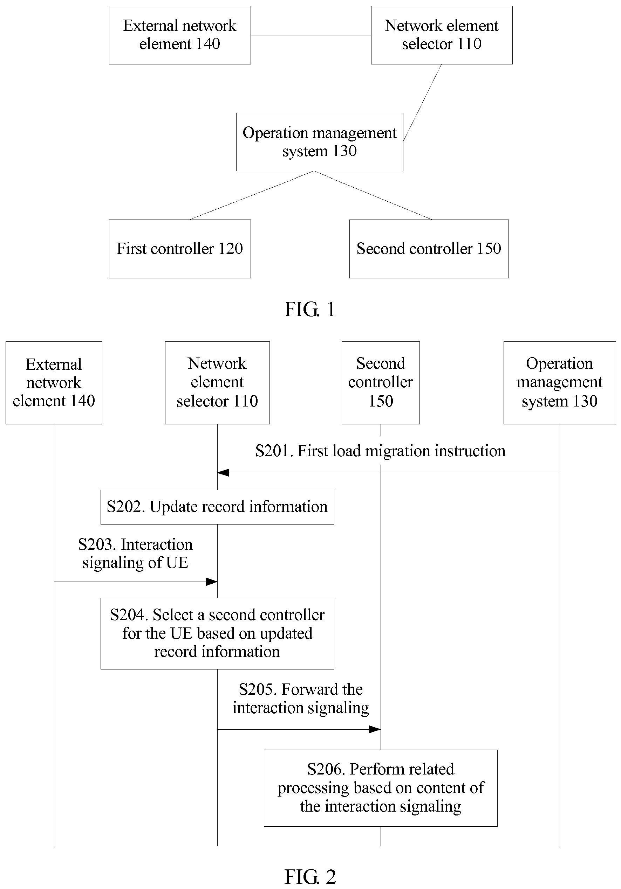

Referring to FIG. 1, FIG. 1 is a schematic diagram of a communications system according to an embodiment of the present invention. The communications system shown in FIG. 1 includes a network element selector 110, a first controller 120, an operation management system 130, an external network element 140, and a second controller 150. When the operation management system 130 detects that the first controller 120 dynamically changes (for example, the first controller 120 is deleted, or the first controller 120 is added to a core network), the operation management system 130 sends a first load migration instruction to the network element selector 110. The network element selector 110 updates record information based on the first load migration instruction, where the record information includes at least one of the following: a record of a mapping relationship between a session index and a controller, and a status record of the controller. The network element selector 110 selects the second controller 150 for UE based on updated record information, and forwards interaction signaling to the second controller 150. In this way, when a controller dynamically changes, a problem that a network element selector does not re-balance load in time may be avoided, thereby improving utilization and availability of resources of a core network.

The following describes the embodiments of the present invention in detail with reference to the accompanying drawings, so that a person skilled in the art has a better understanding.

As shown in FIG. 2, a load balancing method provided in an embodiment of the present invention includes the following steps:
S201. When detecting that a first controller dynamically changes, an operation management system sends a first load migration instruction to a network element selector.
S202. The network element selector receives the first load migration instruction from the operation management system, and updates record information based on the first load migration instruction, where the record information includes at least one of the following: a record of a mapping relationship between a session index and a controller, and a status record of the controller.
S203. An external network element sends interaction signaling of UE to the network element selector.
S204. The network element selector receives the interaction signaling of the UE from the external network element, and selects a second controller for the UE based on updated record information.
S205. The network element selector forwards the interaction signaling to the second controller.
S206. The second controller receives the interaction signaling forwarded by the network element selector, and performs related processing based on content of the interaction signaling.

The dynamic change in the first controller, for example, may be that the first controller is deleted from a core network, or the first controller is added to the core network.

Optionally, the first load migration instruction carries an identifier of the first controller and an identifier of the second controller.

Optionally, the first load migration instruction carries a user group identifier and the identifier of the second controller.

Optionally, the first load migration instruction carries the identifier of the first controller and status information of the first controller. The status information of the first controller may be, for example, that the first controller is deleted, or the first controller is added.

In this embodiment of the present invention, when the status information of the first controller is that the first controller is deleted, the first controller is different from the second controller; or
when the status information of the first controller is that the first controller is added, the first controller and the second controller are a same controller.

Optionally, when the status information of the first controller is that the first controller is deleted, a specific implementation in which the network element selector updates the record of the mapping relationship between the session index and the controller based on the first load migration instruction is: The network element selector searches for a record that is of the mapping relationship and that matches the identifier of the first controller from the record of the mapping relationship between the session index and the controller, and deletes the detected record of the mapping relationship; and
a specific implementation in which the network element selector updates the status record of the controller is: The network element selector searches for a status record that matches the identifier of the first controller from the status record of the controller, and marks the detected status record as deleted.

That is, when the first controller is deleted from the core network, the network element selector may clear the record that is corresponding to the first controller and that is of the mapping relationship between the session index and the controller and/or mark the first controller as deleted in the status record of the controller.

Optionally, when the status information of the first controller is that the first controller is added, a specific implementation in which the network element selector updates the status record of the controller is: The network element selector adds a status record corresponding to the identifier of the first controller to the status record of the controller, and marks the added status record as added. That is, when the first controller is added to the core network, the network element selector marks the first controller as added in the status record of the controller.

Optionally, after the network element selector forwards the interaction signaling to the second controller, the method further includes:
if the UE is a migration UE, re-updating, by the network element selector, the record of the mapping relationship between the session index and the controller.

A manner in which the network element selector determines whether the UE is a migration UE specifically is: The network element selector determines a record that is corresponding to the UE and that is of a mapping relationship between the session index and the controller, and determines whether a controller that is recorded in the record of the mapping relationship is the second controller. If the controller that is recorded in the record of the mapping relationship is the second controller, the network element selector determines that the UE is not a migration UE; or if the controller that is recorded in the record of the mapping relationship is not the second controller, the network element selector determines that the UE is a migration UE.

When the UE is a migration UE, the controller that is recorded in the record that is corresponding to the UE and that is of the mapping relationship between the session index and the controllers changes. In this case, the network element selector changes an identifier of the controller in the record of the mapping relationship to the identifier of the second controller.

Optionally, before the second controller performs related processing based on the content of the interaction signaling, the second controller first determines whether the UE is a migration UE. If the UE is a migration UE, the second controller reads context data of the UE from a database, and then the second controller performs related processing based on the content of the interaction signaling. A manner in which the second controller determines whether the UE is a migration UE is: The second controller queries, based on an identifier of the UE, whether the second controller locally stores the context data of the UE. If the second controller locally stores the context data of the UE, the second controller determines that the UE is not a migration UE; or if the second controller does not locally store the context data of the UE, the second controller determines that the UE is a migration UE.

Optionally, when the UE is a migration UE, the second controller allocates a new session index to the UE, and then the second controller initiates a session index update instruction to the network element selector and the external network element, where the session index update instruction carries the new session index of the UE. After receiving the session index update instruction, the network element selector updates the record of the mapping relationship between the session index and the controller based on the new session index of the UE. After the external network element receives the session index update instruction, the external network element replaces the session index of the UE with the new session index of the UE. The new session index of the UE is allocated by the second controller to the UE.

Optionally, when the operation management system sends the first load migration instruction to the network element selector, the operation management system sends a second load migration instruction to the second controller. The second load migration instruction carries the identifier of the first controller or the user group identifier. After the second controller receives the second load migration instruction, the second controller reads, from the database, context data of all users corresponding to the identifier of the first controller or of all users corresponding to the user group identifier to the second controller.

Further, after the second controller reads, from the database, the context data of all the users corresponding to the identifier of the first controller or of all the users corresponding to the user group identifier to the second controller, the second controller allocates a new session index to the user corresponding to the identifier of the first controller or the user corresponding to the user group identifier. The second controller initiates the session index update instruction to the external network element and the network element selector, where the session index update instruction carries the new session index of the user corresponding to the identifier of the first controller or of the user corresponding to the user group identifier. After the external network element receives the session index update instruction that is sent by the second controller, the external network element updates the session index of the user based on the new session index of all the users corresponding to the identifier of the first controller or of all the users corresponding to the user group identifier. After the network element selector receives the session index update instruction that is sent by the second controller, the network element selector updates the record of the mapping relationship between the session index and the controller based on information that is carried by a new session index update instruction of all the users corresponding to the identifier of the first controller or of all the users corresponding to the user group identifier.

It can be learned that, in this embodiment of the present invention, when the first controller dynamically changes, the operation management system sends the first load migration instruction to the network element selector, and the network element selector updates the record information based on the first load migration instruction, where the record information includes at least one of the following: a record of the mapping relationship between the session index and the controller, and the status record of the controller. In this way, when the network element selector subsequently receives the interaction signaling that is of the UE and that is sent by the external network element, the network element selector selects the second controller for the UE based on the updated record information, and forwards the interaction signaling to the second controller. In this way, when a controller dynamically changes (for example, the controller is deleted or added), a problem that the network element selector does not re-balance load in time may be avoided, thereby improving utilization and availability of resources of a core network.

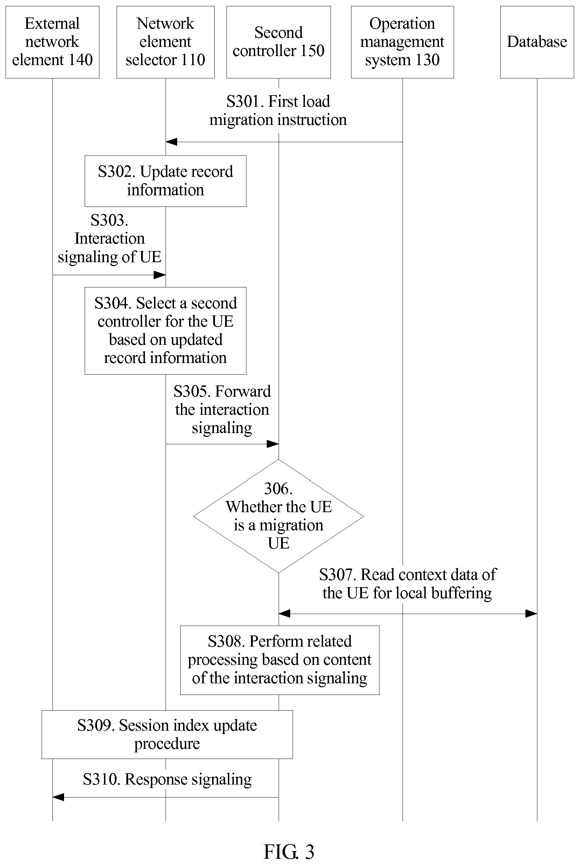

For example, a second embodiment of the present invention further provides another more detailed method procedure. As shown in FIG. 3, the method includes the following steps:
S301. When detecting that a first controller dynamically changes, an operation management system sends a first load migration instruction to a network element selector, where the first load migration instruction carries an identifier and status information of the first controller.
S302. The network element selector receives the first load migration instruction sent by the operation management system, and updates a record of a mapping relationship between a session index and a controller and/or updates a status record of a controller based on the first load migration instruction.
S303. An external network element sends interaction signaling of UE to the network element selector.
S304. The network element selector receives the interaction signaling that is of the UE and that is sent by the external network element, and selects a second controller for the UE based on an updated record of the mapping relationship between the session index and the controller and/or an updated status record of the controller.
S305. The network element selector forwards the interaction signaling to the second controller.
S306. The second controller receives the interaction signaling sent by the network element selector, and determines whether the UE is a migration UE.

If the UE is a migration UE, steps S307 to S310 are performed.

If the UE is not a migration UE, step S308 is performed, and after step S308 is performed, step S310 is performed.

S307. The second controller reads context data of the UE from a database for local buffering.

S308. The second controller performs related processing based on content of the interaction signaling.

S309. The second controller initiates a session index update instruction to the network element selector and the external network element, where the session index update instruction carries a new session index of the UE, and the session index update instruction is used to instruct the external network element to update the session index of the UE, and instruct the network element selector to update the record of the mapping relationship between the session index and the controller.

S310. The second controller returns response signaling to the external network element for the interaction signaling.

It should be noted that, when the status information of the first controller is that the first controller is deleted, the first controller is different from the second controller, and when the status information of the first controller is that the first controller is added, the first controller and the second controller are a same controller. It should be noted that, for a specific implementation process of each step of the method shown in FIG. 3, refer to the specific implementation process described in the foregoing method, and details are not described herein again.

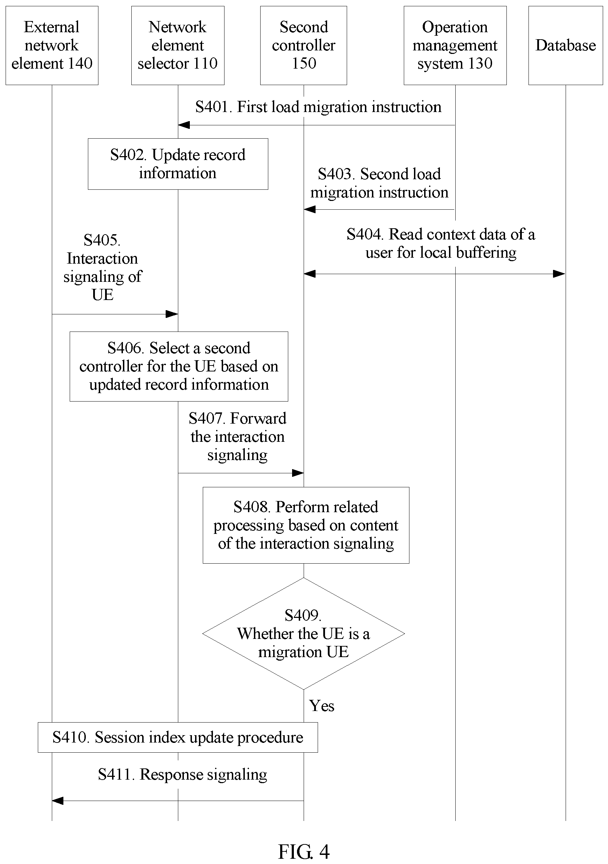

For example, a third embodiment of the present invention further provides another more detailed method procedure. As shown in FIG. 4, the method includes the following steps:
S401. When detecting that a first controller dynamically changes, an operation management system sends a first load migration instruction to a network element selector, where the first load migration instruction carries an identifier of the first controller and an identifier of a second controller, or the first load migration instruction carries a user group identifier and an identifier of a second controller.
S402. The network element selector receives the first load migration instruction sent by the operation management system, and updates a record of a mapping relationship between a session index and a controller based on the first load migration instruction.
S403. The operation management system sends a second load migration instruction to the second controller, where the second load migration instruction carries the identifier of the first controller or the user group identifier.
S404. The second controller receives the second load migration instruction sent by the operation management system, and reads, from a database, the context data of all users corresponding to the identifier of the first controller or of all users corresponding to the user group identifier to the second controller for buffering.
S405. An external network element sends interaction signaling of UE to the network element selector.
S406. The network element selector receives the interaction signaling that is of the UE and that is sent by the external network element, and selects the second controller for the UE based on an updated record of the mapping relationship between the session index and the controller.
S407. The network element selector forwards the interaction signaling to the second controller.
S408. The second controller receives the interaction signaling sent by the network element selector, and performs related processing based on content of the interaction signaling.
S409. The second controller determines whether the UE is a migration UE.

If the UE is a migration UE, steps S410 and S411 are performed.

If the UE is not a migration UE, no operation is performed.

S410. The second controller initiates a session index update instruction to the network element selector and the external network element, where the session index update instruction carries a new session index of the UE, and the session index update instruction is used to instruct the external network element to update the session index of the UE, and instruct the network element selector to update the record of the mapping relationship between the session index and the controller.

S411. The second controller returns response signaling to the external network element for the interaction signaling.

It should be noted that, step S403 may be performed when step S401 is performed, or may not be performed when step S401 is performed. Preferably, step S403 is performed when step S401 is performed. It should be noted that, for a specific implementation process of each step of the method shown in FIG. 4, refer to the specific implementation process described in the foregoing method, and details are not described herein again.

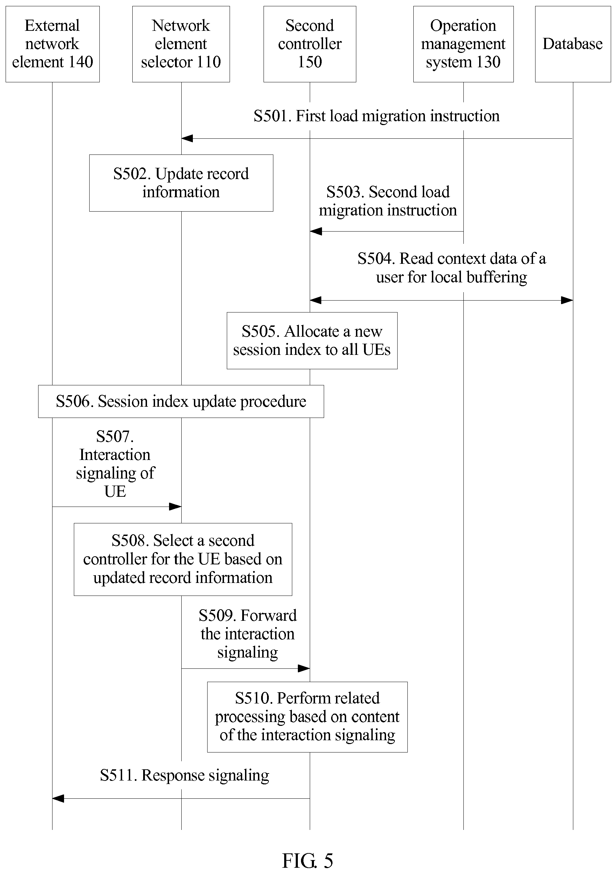

For example, a fourth embodiment of the present invention further provides another more detailed method procedure. As shown in FIG. 5, the method includes the following steps:
S501. When detecting that a first controller dynamically changes, an operation management system sends a first load migration instruction to a network element selector, where the first load migration instruction carries an identifier of the first controller and an identifier of a second controller, or the first load migration instruction carries a user group identifier and an identifier of a second controller.
S502. The network element selector receives the first load migration instruction sent by the operation management system, and updates a record of a mapping relationship between a session index and a controller based on the first load migration instruction.
S503. The operation management system sends a second load migration instruction to the second controller, where the second load migration instruction carries the identifier of the first controller or the user group identifier.
S504. The second controller receives the second load migration instruction sent by the operation management system, and reads, from a database, the context data of a user corresponding to the identifier of the first controller or of a user corresponding to the user group identifier to the second controller for buffering.
S505. The second controller allocates a new session index to the user corresponding to the identifier of the first controller or the user corresponding to the user group identifier.
S506. The second controller initiates a session index update instruction to an external network element and the network element selector, where the session index update instruction carries the new session index of the user corresponding to the identifier of the first controller or of the user corresponding to the user group identifier, the session index update instruction is used to instruct the external network element to update the session index of the user, and is used to instruct the network element selector to update the record of the mapping relationship between the session index and the controller.
S507. The external network element sends interaction signaling of UE to the network element selector.
S508. The network element selector receives the interaction signaling that is of the UE and that is sent by the external network element, and selects the second controller for the UE based on an updated record of the mapping relationship between the session index and the controller and/or an updated status record of the controller.
S509. The network element selector forwards the interaction signaling to the second controller.
S510. The second controller receives the interaction signaling sent by the network element selector, and performs related processing based on content of the interaction signaling.
S511. The second controller returns response signaling to the external network element for the interaction signaling.

It should be noted that, step S503 may be performed when step S501 is performed, or may not be performed when step S501 is performed. Preferably, step S503 is performed when step S501 is performed. It should be noted that, for a specific implementation process of each step of the method shown in FIG. 5, refer to the specific implementation process described in the foregoing method, and details are not described herein again.

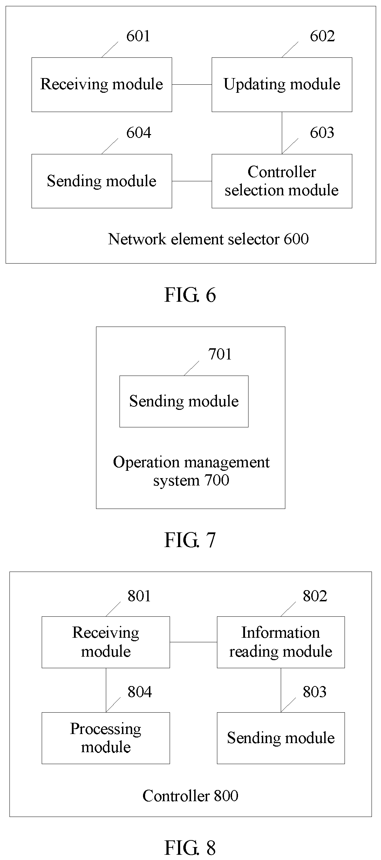

An embodiment of the present invention further provides a network element selector 600, as shown in FIG. 6, including:
a receiving module 601, configured to: when a first controller dynamically changes, receive a first load migration instruction from an operation management system;
an updating module 602, configured to update record information based on the first load migration instruction, where
the receiving module 601 is further configured to receive interaction signaling of UE from an external network element;
a controller selection module 603, configured to select a second controller for the UE based on updated record information;
a sending module 604, configured to forward the interaction signaling to the second controller; where
the record information includes at least one of the following: a record of a mapping relationship between a session index and a controller, and a status record of the controller.

Optionally, the first load migration instruction carries an identifier of the first controller and an identifier of the second controller.

Optionally, the first load migration instruction carries a user group identifier and the identifier of the second controller.

Optionally, the first load migration instruction carries the identifier of the first controller and status information of the first controller.

Optionally, the status information of the first controller is that the first controller is deleted;
the updating module 602 is specifically configured to: search for a record that is of the mapping relationship and that matches the identifier of the first controller from the record of the mapping relationship between the session index and the controller, and delete the detected record of the mapping relationship; and
the updating module 602 is specifically configured to: search for a status record that matches the identifier of the first controller from the status record of the controller, and mark the detected status record as deleted.

Optionally, the status information of the first controller is that the first controller is added; and
the updating module 602 is specifically configured to: add a status record corresponding to the identifier of the first controller to the status record of the controller, and mark the added status record as added.

Optionally, after the sending module 604 forwards the interaction signaling to the second controller, the updating module 602 is further configured to: if the UE is a migration UE, re-update the record of the mapping relationship between the session index and the controller.

Optionally, after the sending module 604 forwards the interaction signaling to the second controller, the receiving module 601 is further configured to receive a session index update instruction initiated by the second controller, where the session index update instruction carries a new session index of the UE; and the updating module 602 is further configured to re-update the record of the mapping relationship between the session index and the controller based on the new session index of the UE.

Optionally, after the updating module 602 updates the record information based on the first load migration instruction, the receiving module 601 is further configured to receive a session index update instruction initiated by the second controller, where the session index update instruction carries a new session index of a user corresponding to the identifier of the first controller or of a user corresponding to the user group identifier; and the updating module 602 is further configured to update the record of the mapping relationship between the session index and the controller based on the new session index of the user corresponding to the identifier of the first controller or of the user corresponding to the user group identifier.

Optionally, the updating module 602 is specifically configured to: search for the record that is of the mapping relationship and that matches the identifier of the first controller or a record that is of the mapping relationship and that matches the user group identifier from the record of the mapping relationship between the session index and the controller, and replace an identifier of the controller in the detected record of the mapping relationship with the identifier of the second controller.

It should be noted that the foregoing modules (the receiving module 601, the updating module 602, the controller selection module 603, and the sending module 604) are configured to perform related steps of the foregoing method.

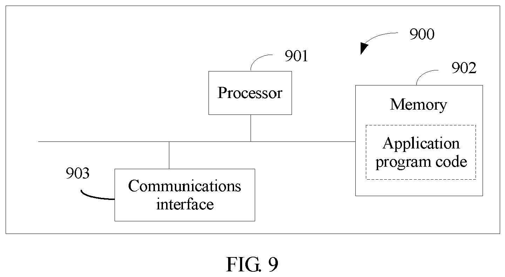

In this embodiment, the network element selector 600 is presented in a form of a module. The "module" herein may be an application-specific integrated circuit (application-specific integrated circuit, ASIC), a processor and a memory that execute one or more software or firmware programs, an integrated logic circuit, and/or another device that can provide the foregoing functions. In addition, the foregoing updating module 602 and the controller selection module 603 may be implemented by using a processor 901 of a terminal device shown in FIG. 9. The receiving module 601 and the sending module 604 may be implemented by using a communications interface 903 of the terminal device shown in FIG. 9.

An embodiment of the present invention further provides an operation management system 700, as shown in FIG. 7, including:
a sending module 701, configured to send a first load migration instruction to a network element selector, where the first load migration instruction carries an identifier of the first controller or a user group identifier, and an identifier of a third controller, and the first load migration instruction is used, based on information that is carried by the first load migration instruction, to instruct the network element selector to update a record of a mapping relationship between a session index and a controller.

Optionally, the sending module 701 is further configured to: when the sending module sends the first load migration instruction to the network element selector, send a second load migration instruction to the second controller, where the second load migration instruction carries the identifier of the first controller or the user group identifier, and the identifier of the first controller or the user group identifier is used to read, from a database, context data of all users corresponding to the identifier of the first controller or of all users corresponding to the user group identifier to the second controller.

It should be noted that the foregoing module (the sending module 701) is configured to perform related steps of the foregoing method.

In this embodiment, the operation management system 700 is presented in a form of a module. The "module" herein may be an application-specific integrated circuit (application-specific integrated circuit, ASIC), a processor and a memory that execute one or more software or firmware programs, an integrated logic circuit, and/or another device that can provide the foregoing functions. In addition, the foregoing sending module 701 may be implemented by using a communications interface 903 of a terminal device shown in FIG. 9.

An embodiment of the present invention further provides a controller 800. The controller 800 is the second controller in the foregoing method. As shown in FIG. 8, the controller 800 includes:
a receiving module 801, configured to receive a second load migration instruction from an operation management system, where the second load migration instruction carries an identifier of a first controller or a user group identifier;
an information reading module 802, configured to read, from a database, context data of a user corresponding to the identifier of the first controller, or context data of a user corresponding to the user group identifier to the second controller;
a sending module 803, configured to initiate a session index update instruction to an external network element and a network element selector, where the session index update instruction carries a new session index of the user corresponding to the identifier of the first controller or of the user corresponding to the user group identifier, the session index update instruction is used to instruct the external network element to update the session index of the user, and the session index update instruction is used to instruct the network element selector to update a record of a mapping relationship between the session index and a controller, where
the receiving module 801 is further configured to receive interaction signaling that is of UE and that is forwarded by the network element selector; and
a processing module 804, configured to perform related processing based on content of the interaction signaling.

It should be noted that the foregoing modules (the receiving module 801, the information reading module 802, the sending module 803, and the processing module 804) are configured to perform related steps of the foregoing method.

In this embodiment, the controller 800 is presented in a form of a module. The "module" herein may be an application-specific integrated circuit (application-specific integrated circuit, ASIC), a processor and a memory that execute one or more software or firmware programs, an integrated logic circuit, and/or another device that can provide the foregoing functions. In addition, the foregoing information reading module 802 and the processing module 804 may be implemented by using a processor 901 of a terminal device shown in FIG. 9. The receiving module 801 and the sending module 803 may be implemented by using a communications interface 903 of the terminal device shown in FIG. 9.

As shown in FIG. 9, the foregoing network element selector 600, the operation management system 700, and the controller 800 may be implemented in a manner of a computer device (or a system) in FIG. 9.

As shown in FIG. 9, a terminal 900 may be implemented in a structure shown in FIG. 9. The terminal 900 may include at least one processor 901, at least one memory 902, and at least one communications interface 903. The processor 901, the memory 902, and the communications interface 903 are connected and complete mutual communication by using a communications bus.

The processor 901 may be a general purpose central processing unit (CPU), a microprocessor, an application-specific integrated circuit (application-specific integrated circuit, ASIC), or one or more integrated circuits configured to control execution of the foregoing solution.

The communications interface 903 is configured to communicate with another device or communications network, such as an Ethernet network, a radio access network (RAN), or a wireless local area network (Wireless Local Area Networks, WLAN).

The memory 902 may be a read-only memory (Read-Only Memory, ROM) or another type of static storage device capable of storing static information and instructions, or a random access memory (Random Access Memory, RAM) or another type of dynamic storage device capable of storing information and instructions; or may be an electrically erasable programmable read only memory (Electrically Erasable Programmable Read Only Memory, EEPROM), a compact disc read-only memory (Compact Disc Read-Only Memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or any other medium capable of carrying or storing expected program code in a form of an instruction or a data structure and capable of being accessed by a computer. However, the memory 902 is not limited thereto. A memory may exist independently and is connected to a processor by using a bus. The memory may also be integrated with the processor.

The memory 902 is configured to store application program code used to execute the foregoing solution, and the processor 901 controls and executes the program code. The processor 901 is configured to execute the application program code stored in the memory 902.

When the computer device shown in FIG. 9 is a network element selector, the code stored by the memory 902 may be used to perform the foregoing load balancing method performed by the terminal device that is provided in the foregoing, for example: when a first controller dynamically changes, receiving a first load migration instruction from an operation management system, updating record information based on the first load migration instruction, receiving interaction signaling of UE from an external network element, selecting a second controller for the UE based on updated record information, and forwarding the interaction signaling to the second controller, where the record information includes at least one of the following: a record of a mapping relationship between a session index and a controller, and a status record of the controller.

When the computer device shown in FIG. 9 is an operation management system, the code stored by the memory 902 may be used to perform the foregoing load balancing method performed by the terminal device that is provided in the foregoing, for example: when detecting that the first controller changes dynamically, sending the first load migration instruction to the network element selector, where the first load migration instruction carries an identifier of the first controller or a user group identifier, and an identifier of the second controller, and information that is carried by the first load migration instruction is used to update the record of the mapping relationship between the session index and the controller.

When the computer device shown in FIG. 9 is a controller, the code stored by the memory 902 may be used to perform the foregoing load balancing method performed by the terminal device that is provided in the foregoing, for example: receiving a second load migration instruction from the operation management system, where the second load migration instruction carries the identifier of the first controller or the user group identifier; reading, from a database, context data of a user corresponding to the identifier of the first controller, or context data of a user corresponding to the user group identifier to the second controller; allocating a new session index to the user corresponding to the identifier of the first controller or the user corresponding to the user group identifier; initiating the session index update instruction to the external network element and the network element selector, where the session index update instruction carries the new session index of the user corresponding to the identifier of the first controller or of the user corresponding to the user group identifier, the session index update instruction is used to instruct the external network element to update the session index of the user, and the session index update instruction is used to instruct the network element selector to update the record of the mapping relationship between the session index and the controller; and receiving the interaction signaling that is of the UE and that is forwarded by the network element selector, and performing related processing based on content of the interaction signaling.

An embodiment of the present invention further provides a computer storage medium. The computer storage medium may store a program, and when the program is executed, at least some or all of the steps of any load balancing method in the foregoing method embodiments may be performed.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

In the several embodiments provided in this application, it should be understood that the disclosed apparatus may be implemented in other manners. For example, the described apparatus embodiment is merely used as an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage. Based on such an understanding, the technical solutions of the present invention essentially, or the part contributing to the prior art, or all or some of the technical solutions may be implemented in the form of a software product. The software product is stored in a storage and includes several instructions for instructing a computer device (which may be a personal computer, a server, or a network device) to perform all or some of the steps of the methods described in the embodiments of the present invention. The foregoing storage includes: any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the embodiments may be implemented by a program instructing relevant hardware. The program may be stored in a computer readable storage. The storage may include a flash memory, a read-only memory (English: Read-Only Memory, ROM for short), a random access memory (English: Random Access Memory, RAM for short), a magnetic disk, and an optical disc.

The embodiments of the present invention are described in detail above. The principle and implementation of the present invention are described herein through specific examples. The description about the embodiments of the present invention is merely provided to help understand the method and core ideas of the present invention. In addition, a person of ordinary skill in the art can make variations and modifications to the present invention in terms of the specific implementations and application scopes according to the ideas of the present invention. Therefore, the content of specification shall not be construed as a limit to the present invention.

## Claims

1. A load balancing method, comprising:
when a first controller dynamically changes, receiving (S201), by a network element selector, a first load migration instruction from an operation management system;
updating (S202), by the network element selector, record information based on the first load migration instruction;
receiving (S203), by the network element selector, interaction signaling of UE from an external network element, selecting a second controller for the UE based on updated record information, and forwarding the interaction signaling to the second controller; wherein
the record information comprises at least one of the following: a record of a mapping relationship between a session index and a controller, and a status record of the controller.

2. The method according to claim 1, wherein the first load migration instruction carries an identifier of the first controller and an identifier of the second controller.

3. The method according to claim 1, wherein the first load migration instruction carries a user group identifier and an identifier of the second controller.

4. The method according to claim 1, wherein the first load migration instruction carries an identifier of the first controller and status information of the first controller.

5. The method according to claim 4, wherein the status information of the first controller is that the first controller is deleted;
the updating, by the network element selector, the record of the mapping relationship between the session index and the controller based on the first load migration instruction comprises: searching for, by the network element selector, a record that is of the mapping relationship and that matches the identifier of the first controller from the record of the mapping relationship between the session index and the controller, and deleting the detected record of the mapping relationship; and
the updating, by the network element selector, the status record of the controller based on the first load migration instruction comprises: searching for, by the network element selector, a status record that matches the identifier of the first controller from the status record of the controller, and marking the detected status record as deleted.

6. The method according to claim 4, wherein the status information of the first controller is that the first controller is added; and
the updating, by the network element selector, the status record of the controller based on the first load migration instruction comprises: adding, by the network element selector, a status record corresponding to the identifier of the first controller to the status record of the controller, and marking the added status record as added.

7. The method according to any one of claims 4 to 6, wherein after the forwarding, by the network element selector, the interaction signaling to the second controller, the method further comprises:
if the UE is a migration UE, re-updating, by the network element selector, the record of the mapping relationship between the session index and the controller.

8. The method according to any one of claims 2 to 7, wherein after the forwarding, by the network element selector, the interaction signaling to the second controller, the method further comprises:
receiving, by the network element selector, a session index update instruction initiated by the second controller, wherein the session index update instruction carries a new session index of the UE; and
re-updating, by the network element selector, the record of the mapping relationship between the session index and the controller based on the new session index of the UE.

9. The method according to claim 2 or 3, wherein after updating, by the network element selector, record information based on the first load migration instruction, the method further comprises:
receiving, by the network element selector, a session index update instruction initiated by the second controller, wherein the session index update instruction carries a new session index of a user corresponding to the identifier of the first controller or of a user corresponding to the user group identifier; and
updating, by the network element selector, the record of the mapping relationship between the session index and the controller based on the new session index of the user corresponding to the identifier of the first controller or of the user corresponding to the user group identifier.

10. The method according to any one of claims 2, 3, and 9, wherein the updating, by the network element selector, the record of the mapping relationship between the session index and the controller based on the first load migration instruction comprises: searching for, by the network element selector, the record that is of the mapping relationship and that matches the identifier of the first controller or a record that is of the mapping relationship and that matches the user group identifier from the record of the mapping relationship between the session index and the controller, and replacing an identifier of the controller in the detected record of the mapping relationship with the identifier of the second controller.

11. A load balancing method, comprising:
when detecting that a first controller dynamically changes, sending (S201), by an operation management system, a first load migration instruction to a network element selector, wherein the first load migration instruction carries an identifier of the first controller or a user group identifier, and the first load migration instruction carries an identifier of a second controller, and information that is carried by the first load migration instruction is used to update a record of a mapping relationship between a session index and a controller.

12. The method according to claim 11, wherein the method further comprises:
sending, by the operation management system, a second load migration instruction to the second controller, wherein the second load migration instruction carries the identifier of the first controller or the user group identifier, and the identifier of the first controller or the user group identifier is used to read, from a database, context data of a user corresponding to the identifier of the first controller or of a user corresponding to the user group identifier to the second controller.

13. A load balancing method, comprising:
receiving (S503), by a second controller, a second load migration instruction from an operation management system, wherein the second load migration instruction carries an identifier of a first controller or a user group identifier;
reading (S504), by the second controller, from a database, context data of a user corresponding to the identifier of the first controller, or context data of a user corresponding to the user group identifier to the second controller;
allocating (S505), by the second controller, a new session index to the user corresponding to the identifier of the first controller or the user corresponding to the user group identifier;
initiating (S506), by the second controller, a session index update instruction to an external network element and a network element selector, wherein the session index update instruction carries the new session index of the user corresponding to the identifier of the first controller or of the user corresponding to the user group identifier, the session index update instruction is used to instruct the external network element to update the session index of the user, and the session index update instruction is used to instruct the network element selector to update a record of a mapping relationship between the session index and a controller; and
receiving (S509), by the second controller, interaction signaling that is of UE and that is forwarded by the network element selector, and performing (S510) related processing based on content of the interaction signaling.

14. A network element selector, comprising means configured to perform the steps according to any one of claims 1-10.

15. An operation management system, comprising means configured to perform the steps according to claim 11 or 12.

## Patentansprüche

1. Lastenausgleichsverfahren, umfassend:
wenn ein erster Controller sich dynamisch ändert, Empfangen (S201) einer ersten Lastenmigrationsanweisung von einem Betriebsmanagementsystem durch einen Netzelementauswähler;
Aktualisieren (S202) der Aufzeichnungsinformationen basierend auf der ersten Lastenmigrationsanweisung durch den Netzelementauswähler;
Empfangen (S203) einer Interaktionssignalisierung eines UE von einem externen Netzelement durch den Netzelementauswähler, Auswählen eines zweiten Controllers für das UE basierend auf aktualisierten Aufzeichnungsinformationen und Weiterleiten der Interaktionssignalisierung an den zweiten Controller; wobei
die Aufzeichnungsinformationen umfassen: eine Aufzeichnung einer Mapping-Beziehung zwischen einem Sitzungsindex und einem Controller und/oder eine Statusaufzeichnung des Controllers.

2. Verfahren nach Anspruch 1, wobei die erste Lastenmigrationsanweisung einen Identifikator des ersten Controllers und einen Identifikator des zweiten Controllers trägt.

3. Verfahren nach Anspruch 1, wobei die erste Lastenmigrationsanweisung einen Benutzergruppenidentifikator und einen Identifikator des zweiten Controllers trägt.

4. Verfahren nach Anspruch 1, wobei die erste Lastenmigrationsanweisung einen Identifikator des ersten Controllers und Statusinformationen des ersten Controllers trägt.

5. Verfahren nach Anspruch 4, wobei die Statusinformationen des ersten Controllers lauten, dass der erste Controller gelöscht ist;
das Aktualisieren der Aufzeichnung der Mapping-Beziehung zwischen dem Sitzungsindex und dem Controller durch den Netzelementauswähler basierend auf der ersten Lastenmigrationsanweisung umfasst: Suchen nach einer Aufzeichnung, die zu der Mapping-Beziehung gehört und die mit dem Identifikator des ersten Controllers aus der Aufzeichnung der Mapping-Beziehung zwischen dem Sitzungsindex und dem Controller übereinstimmt durch den Netzelementauswähler, und Löschen der erfassten Aufzeichnung der Mapping-Beziehung; und
das Aktualisieren der Statusaufzeichnung des Controllers durch den Netzelementauswähler basierend auf der ersten Lastenmigrationsanweisung umfasst: Suchen nach einer Statusaufzeichnung, die mit dem Identifikator des ersten Controllers aus der Statusaufzeichnung des Controllers übereinstimmt durch den Netzelementauswähler, und Markieren der erfassten Statusaufzeichnung als gelöscht.

6. Verfahren nach Anspruch 4, wobei die Statusinformationen des ersten Controllers lauten, dass der erste Controller hinzugefügt ist; und
das Aktualisieren der Statusaufzeichnung des Controllers durch den Netzelementauswähler basierend auf der ersten Lastenmigrationsanweisung umfasst: Hinzufügen einer Statusaufzeichnung, die dem Identifikator des ersten Controllers entspricht, zu der Statusaufzeichnung des Controllers durch den Netzelementauswähler, und Markieren der hinzugefügten Statusaufzeichnung als hinzugefügt.

7. Verfahren nach einem der Ansprüche 4 bis 6, wobei, nach dem Weiterleiten der Interaktionssignalisierung an den zweiten Controller durch den Netzelementauswähler, das Verfahren ferner umfasst:
wenn das UE ein Migrations-UE ist, erneutes Aktualisieren der Aufzeichnung der Mapping-Beziehung zwischen dem Sitzungsindex und dem Controller durch den Netzelementauswähler.

8. Verfahren nach einem der Ansprüche 2 bis 7, wobei, nach dem Weiterleiten der Interaktionssignalisierung an den zweiten Controller durch den Netzelementauswähler, das Verfahren ferner umfasst:
Empfangen einer von dem zweiten Controller eingeleiteten Sitzungsindex-Aktualisierungsanweisung durch den Netzelementauswähler, wobei die Sitzungsindex-Aktualisierungsanweisung einen neuen Sitzungsindex des UE trägt; und
erneutes Aktualisieren der Aufzeichnung der Mapping-Beziehung zwischen dem Sitzungsindex und dem Controller durch den Netzelementauswähler basierend auf dem neuen Sitzungsindex des UE.

9. Verfahren nach Anspruch 2 oder 3, wobei, nach dem Aktualisieren von Aufzeichnungsinformationen basierend auf der ersten Lastenmigrationsanweisung durch den Netzelementauswähler, das Verfahren ferner umfasst:
Empfangen einer von dem zweiten Controller eingeleiteten Sitzungsindex-Aktualisierungsanweisung durch den Netzelementauswähler, wobei die Sitzungsindex-Aktualisierungsanweisung einen neuen Sitzungsindex eines Benutzers, der dem Identifikator des ersten Controllers entspricht, oder eines Benutzers, der dem Benutzergruppenidentifikator entspricht, trägt; und
Aktualisieren der Aufzeichnung der Mapping-Beziehung zwischen dem Sitzungsindex und dem Controller durch den Netzelementauswähler basierend auf dem neuen Sitzungsindex des Benutzers, der dem Identifikator des ersten Controllers entspricht, oder des Benutzers, der dem Benutzergruppenidentifikator entspricht.

10. Verfahren nach einem der Ansprüche 2, 3 und 9, wobei das Aktualisieren der Aufzeichnung der Mapping-Beziehung zwischen dem Sitzungsindex und dem Controller durch den Netzelementauswähler basierend auf der ersten Lastenmigration umfasst: Suchen der Aufzeichnung, die der Mapping-Beziehung angehört und die mit dem Identifikator des ersten Controllers übereinstimmt, oder einer Aufzeichnung, die der Mapping-Beziehung angehört und die mit dem Benutzergruppenidentifikator aus der Aufzeichnung der Mapping-Beziehung zwischen dem Sitzungsindex und dem Controller übereinstimmt durch den Netzelementauswähler, und Ersetzen eines Identifikators des Controllers in der erfassten Aufzeichnung der Mapping-Beziehung durch den Identifikator des zweiten Controllers.

11. Lastenausgleichsverfahren, umfassend:
wenn erfasst wird, dass sich ein erster Controller dynamisch ändert, Senden (S201) einer ersten Lastenmigrationsanweisung durch ein Betriebsmanagementsystem an einen Netzelementauswähler, wobei die erste Lastenmigrationsanweisung einen Identifikator des ersten Controllers oder einen Benutzergruppenidentifikator trägt, und die erste Lastenmigrationsanweisung einen Identifikator eines zweiten Controllers trägt, und Informationen, die von der ersten Lastenmigrationsanweisung getragen werden, verwendet werden, um eine Aufzeichnung einer Mapping-Beziehung zwischen einem Sitzungsindex und einem Controller zu aktualisieren.

12. Verfahren nach Anspruch 11, wobei das Verfahren ferner umfasst:
Senden einer zweiten Lastenmigrationsanweisung durch das Betriebsmanagementsystem an den zweiten Controller, wobei die zweite Lastenmigrationsanweisung den Identifikator des ersten Controllers oder den Benutzergruppenidentifikator trägt und der Identifikator des ersten Controllers oder der Benutzergruppenidentifikator verwendet wird, um aus einer Datenbank Kontextdaten eines Benutzers, der dem Identifikator des ersten Controllers entspricht, oder eines Benutzers, der dem Benutzergruppenidentifikator entspricht, an den zweiten Controller zu lesen.

13. Lastenausgleichsverfahren, umfassend:
Empfangen (S503) einer zweiten Lastenmigrationsanweisung von einem Betriebsmanagementsystem durch einen zweiten Controller, wobei die zweite Lastenmigrationsanweisung einen Identifikator eines ersten Controllers oder einen Benutzergruppenidentifikator trägt;
Lesen (S504) von Kontextdaten eines Benutzers, die dem Identifikator des ersten Controllers entsprechen, oder von Kontextdaten eines Benutzers, der dem Benutzergruppenidentifikator entspricht, an den zweiten Controller aus einer Datenbank durch den zweiten Controller;
Zuweisen (S505) eines neuen Sitzungsindex durch den zweiten Controller an den Benutzer, der dem Identifikator des ersten Controllers entspricht, oder an den Benutzer, der dem Benutzergruppenidentifikator entspricht;
Einleiten (S506) einer Sitzungsindex-Aktualisierungsanweisung an ein externes Netzelement und einen Netzelementauswähler durch den zweiten Controller, wobei die Sitzungsindex-Aktualisierungsanweisung den neuen Sitzungsindex des Benutzers entsprechend dem Identifikator des ersten Controllers oder des Benutzers entsprechend dem Benutzergruppenidentifikator trägt, die Sitzungsindex-Aktualisierungsanweisung verwendet wird, um das externe Netzelement anzuweisen, den Sitzungsindex des Benutzers zu aktualisieren, und die Sitzungsindex-Aktualisierungsanweisung verwendet wird, um den Netzelementauswähler anzuweisen, eine Aufzeichnung einer Mapping-Beziehung zwischen dem Sitzungsindex und einem Controller zu aktualisieren; und
Empfangen (S509) der Interaktionssignalisierung, die zu dem UE gehört und die vom Netzelementauswähler weitergeleitet wird, durch den zweiten Controller und Durchführen (S510) der zugehörigen Verarbeitung basierend auf dem Inhalt der Interaktionssignalisierung.

14. Netzelementauswähler, umfassend Mittel, die dazu konfiguriert sind, die Schritte nach einem der Ansprüche 1-10 durchzuführen.

15. Betriebsmanagementsystem, umfassend Mittel, die dazu konfiguriert sind, die Schritte nach Anspruch 11 oder 12 durchzuführen.

## Revendications

1. Procédé d'équilibrage de charge, comprenant :
lorsqu'un premier contrôleur change dynamiquement, la réception (S201), par un sélecteur d'élément de réseau, d'une première instruction de migration de charge provenant d'un système de gestion d'opérations ;
la mise à jour (S202), par le sélecteur d'élément de réseau, d'informations d'enregistrement sur la base de la première instruction de migration de charge ;
la réception (S203), par le sélecteur d'élément de réseau, d'une signalisation d'interaction d'un UE provenant d'un élément de réseau externe, la sélection d'un second contrôleur pour l'UE basée sur des informations d'enregistrement mises à jour, et la transmission de la signalisation d'interaction au second contrôleur ; dans lequel
les informations d'enregistrement comprennent : un enregistrement d'une relation de mappage entre un indice de session et un contrôleur et/ou un enregistrement d'état du contrôleur.

2. Procédé selon la revendication 1, dans lequel la première instruction de migration de charge achemine un identifiant du premier contrôleur et un identifiant du second contrôleur.

3. Procédé selon la revendication 1, dans lequel la première instruction de migration de charge achemine un identifiant d'un groupe d'utilisateurs et un identifiant du second contrôleur.

4. Procédé selon la revendication 1, dans lequel la première instruction de migration de charge achemine un identifiant du premier contrôleur et des informations d'état du premier contrôleur.

5. Procédé selon la revendication 4, dans lequel les informations d'état du premier contrôleur sont que le premier contrôleur est effacé ;
la mise à jour, par le sélecteur d'élément de réseau, de l'enregistrement de la relation de mappage entre l'indice de session et le contrôleur sur la base de la première instruction de migration de charge comprend : la recherche, par le sélecteur d'élément de réseau, d'un enregistrement qui vient de la relation de mappage et qui correspond à l'identifiant du premier contrôleur provenant de l'enregistrement de la relation de mappage entre l'indice de session et le contrôleur, et l'effacement de l'enregistrement détecté de la relation de mappage ; et
la mise à jour, par le sélecteur d'élément de réseau, de l'enregistrement d'état du contrôleur sur la base de la première instruction de migration de charge comprend : la recherche, par le sélecteur d'élément de réseau, d'un enregistrement d'état qui correspond à l'identifiant du premier contrôleur provenant de l'enregistrement d'état du contrôleur, et le marquage de l'enregistrement d'état détecté comme effacé.

6. Procédé selon la revendication 4, dans lequel les informations d'état du premier contrôleur sont que le premier contrôleur est ajouté ; et
la mise à jour, par le sélecteur d'élément de réseau, de l'enregistrement d'état du contrôleur sur la base de la première instruction de migration de charge comprend : l'ajout, par le sélecteur d'élément de réseau, d'un enregistrement d'état correspondant à l'identifiant du premier contrôleur à l'enregistrement d'état du contrôleur, et le marquage de l'enregistrement d'état ajouté comme ajouté.

7. Procédé selon l'une quelconque des revendications 4 à 6, le procédé comprenant en outre, après la transmission, par le sélecteur d'élément de réseau, de la signalisation d'interaction au second contrôleur :
si l'UE est un UE de migration, la nouvelle mise à jour, par le sélecteur d'élément de réseau, de l'enregistrement de la relation de mappage entre l'indice de session et le contrôleur.

8. Procédé selon l'une quelconque des revendications 2 à 7, le procédé comprenant en outre, après la transmission, par le sélecteur d'élément de réseau, de la signalisation d'interaction au second contrôleur :
la réception, par le sélecteur d'élément de réseau, d'une instruction de mise à jour d'indice de session initiée par le second contrôleur, dans lequel l'instruction de mise à jour d'indice de session achemine un nouvel indice de session de l'UE ; et
la nouvelle mise à jour, par le sélecteur d'élément de réseau, de l'enregistrement de la relation de mappage entre l'indice de session et le contrôleur sur la base du nouvel indice de session de l'UE.

9. Procédé selon la revendication 2 ou 3, le procédé comprenant en outre, après la mise à jour, par le sélecteur d'élément de réseau, d'informations d'enregistrement basées sur la première instruction de migration de charge :
la réception, par le sélecteur d'élément de réseau, d'une instruction de mise à jour d'indice de session initiée par le second contrôleur, l'instruction de mise à jour d'indice de session acheminant un nouvel indice de session d'un utilisateur correspondant à l'identifiant du premier contrôleur ou d'un utilisateur correspondant à l'identifiant du groupe d'utilisateurs ; et
la mise à jour, par le sélecteur d'élément de réseau, de l'enregistrement de la relation de mappage entre l'indice de session et le contrôleur sur la base du nouvel indice de session de l'utilisateur correspondant à l'identifiant du premier contrôleur ou de l'utilisateur correspondant à l'identifiant du groupe d'utilisateurs.

10. Procédé selon l'une quelconque des revendications 2, 3 et 9, dans lequel la mise à jour, par le sélecteur d'élément de réseau, de l'enregistrement de la relation de mappage entre l'indice de session et le contrôleur sur la base de la première instruction de migration de charge comprend : la recherche, par le sélecteur d'élément de réseau, de l'enregistrement qui vient de la relation de mappage et qui correspond à l'identifiant du premier contrôleur ou d'un enregistrement qui vient de la relation de mappage et qui correspond à l'identifiant du groupe d'utilisateurs provenant de l'enregistrement de la relation de mappage entre l'indice de session et le contrôleur, et le remplacement d'un identifiant du contrôleur dans l'enregistrement détecté de la relation de mappage par l'identifiant du second contrôleur.

11. Procédé d'équilibrage de charge, comprenant :
lors de la détection qu'un premier contrôleur change dynamiquement, l'envoi (S201), par un système de gestion d'opérations, d'une première instruction de migration de charge à un sélecteur d'élément de réseau, la première instruction de migration de charge acheminant un identifiant du premier contrôleur ou un identifiant d'un groupe d'utilisateurs, et la première instruction de migration de charge acheminant un identifiant d'un second contrôleur, et des informations qui sont acheminées par la première instruction de migration de charge étant utilisées pour mettre à jour un enregistrement d'une relation de mappage entre un indice de session et un contrôleur.

12. Procédé selon la revendication 11, le procédé comprenant en outre :
l'envoi, par le système de gestion d'opérations, d'une seconde instruction de migration de charge au second contrôleur, la seconde instruction de migration de charge acheminant l'identifiant du premier contrôleur ou l'identifiant du groupe d'utilisateurs, et l'identifiant du premier contrôleur ou l'identifiant du groupe d'utilisateurs étant utilisé pour lire, à partir d'une base de données, des données contextuelles d'un utilisateur correspondant à l'identifiant du premier contrôleur ou d'un utilisateur correspondant à l'identifiant du groupe d'utilisateurs au second contrôleur.

13. Procédé d'équilibrage de charge, comprenant :
la réception (S503), par un second contrôleur, d'une seconde instruction de migration de charge provenant d'un système de gestion d'opérations, la seconde instruction de migration de charge acheminant un identifiant du premier contrôleur ou un identifiant d'un groupe d'utilisateurs ;
la lecture (S504), par le second contrôleur, à partir d'une base de données, de données contextuelles d'un utilisateur correspondant à l'identifiant du premier contrôleur, ou de données contextuelles d'un utilisateur correspondant à l'identifiant du groupe d'utilisateurs au second contrôleur ;
l'attribution (S505), par le second contrôleur, d'un nouvel indice de session à l'utilisateur correspondant à l'identifiant du premier contrôleur ou l'utilisateur correspondant à l'identifiant du groupe d'utilisateurs ;
l'initiation (S506), par le second contrôleur, d'une instruction de mise à jour d'indice de session à un élément de réseau externe et un sélecteur d'élément de réseau, l'instruction de mise à jour d'indice de session acheminant le nouvel indice de session de l'utilisateur correspondant à l'identifiant du premier contrôleur ou de l'utilisateur correspondant à l'identifiant du groupe d'utilisateurs, l'instruction de mise à jour d'indice de session étant utilisée pour donner instruction à l'élément de réseau externe de mettre à jour l'indice de session de l'utilisateur, et l'instruction de mise à jour de l'indice de session étant utilisée pour donner instruction au sélecteur d'élément de réseau de mettre à jour un enregistrement d'une relation de mappage entre l'indice de session et un contrôleur ; et
la réception (S509), par le second contrôleur, d'une signalisation d'interaction qui vient de l'UE et qui est transmise par le sélecteur d'élément de réseau, et l'exécution (S510) d'un traitement associé basé sur le contenu de la signalisation d'interaction.

14. Sélecteur d'élément de réseau, comprenant des moyens configurés pour mettre en œuvre les étapes selon l'une quelconque des revendications 1 à 10.

15. Système de gestion d'opérations, comprenant des moyens configurés pour mettre en œuvre les étapes selon la revendication 11 ou 12.
